# DEMANDE DE BREVET EUROPEEN

(11) **EP 4 432 086 A1**
(43) Date de publication de la demande: **18.09.2024**
(21) Numéro de dépôt: 23305365.1
(22) Date de dépôt: 16.03.2023
(51) Int. Cl.: G06F 9/50, H04L 67/1031, H04L 67/1004

(54) **PROCÉDÉ ET SYSTÈME DE DÉPLOIEMENT D'UNE APPLICATION SAAS**

(71) Demandeur: BULL SAS, 78340 Les Clayes-Sous-Bois (FR)
(72) Inventeur: GUIONNEAU, Christophe, 38000 Grenoble (FR); DURIEU, Jean-Christophe, 38330 MONTBONNOT SAINT MARTIN (FR)
(74) Mandataire: IPAZ

(57) **Abrégé**

L'invention concerne un procédé (100) de déploiement d'une application as a service, SaaS, en particulier d'une application d'authentification as a service, IDaaS, ledit procédé (100) comprenant les étapes suivantes :
-déploiement (104) d'un module de répartition de charge, prévu pour recevoir les connexions à ladite application, et distribuer lesdites connexions au sein d'un groupe de noeuds applicatifs, chacun exécutant une instance de ladite application et étant prévu pour réaliser au moins une connexion à ladite application, et
-déploiement (106) d'au moins un noeud applicatif maître ;
ledit procédé (100) comprenant en outre au moins une itération d'une étape (130;152) d'ajustement, par un noeud applicatif maître, du nombre de noeuds applicatifs dans ledit groupe en fonction d'un indice, dit indice de charge, représentatif de la charge totale des noeuds applicatifs dudit groupe.

Elle concerne également un programme d'ordinateur et un système mettant en oeuvre un tel procédé.

## Description

La présente invention concerne un procédé de déploiement d'une application SaaS, et en particulier d'une application d'identification as a service, IDaaS. Elle concerne également un système mettant en oeuvre un tel procédé.

Le domaine de l'invention est le domaine des applications proposées en mode SaaS, et en particulier le domaine du déploiement de telles applications.

### État de la technique

Les entreprises utilisent de plus en plus d'applications "as a service" hébergées dans le cloud, appelées applications SaaS dans la présente demande. L'accès à ces applications est géré par un service d'identification des utilisateurs, qui peut être lui aussi proposé sous la forme d'une application SaaS, généralement appelé identification as a service, IDaaS. Une application, ou un service, IDaaS comprend une composante de gestion des utilisateurs permettant l'administration, par des administrateurs, des droits d'accès des utilisateurs, et une composante de gestion des accès permettant une authentification de utilisateurs et des administrateurs.

Le déploiement d'une application SaaS doit répondre à un nombre de connexions variables qui dépend de plusieurs paramètres : nombres d'utilisateurs, nature de l'application, fréquence d'authentification, fréquence de réauthentification, etc. Ainsi, l'architecture de déploiement d'une application SaaS doit être capable de répondre à des pics de connexions et proposer une haute disponibilité de l'application SaaS, être capable de faire face à des charges importantes, tout en optimisant les ressources utilisées pour son déploiement et le coût de l'infrastructure.

On connait actuellement différentes solutions pour le déploiement d'une application en mode SaaS. Une première solution consiste en l'utilisation d'un reverse proxy mais cette solution entraine une faille de confidentialité et n'est pas utilisable pour toute les applications, et en particulier pour une application IDaaS. Une autre solution consiste en l'utilisation d'une résolution de DNS tournante, par exemple en utilisant le principe Round Robin DNS, mais cette solution est coûteuse et ne permet pas une continuité de service avec une répartition de charge efficace. Une autre solution est de réaliser un déploiement multi-tenants avec un surdimensionnement de capacités, mais cette solution est coûteuse et présente des défauts de sécurité.

Un but de la présente invention est de remédier à au moins un des inconvénients précités.

Un autre but de la présente invention est de proposer une solution de déploiement d'une application SaaS, et en particulier d'une application IDaaS, plus flexible, moins coûteuse, proposant une haute disponibilité de l'application et une gestion efficace des charges.

### Exposé de l'invention

L'invention permet d'atteindre au moins l'un des buts précités par un procédé de déploiement d'une application as a service, SaaS, en particulier d'une application d'authentification as a service, IDaaS, ledit procédé comprenant les étapes suivantes :
- déploiement d'un module de répartition de charge, prévu pour recevoir les connexions à ladite application, et distribuer lesdites connexions au sein d'un groupe de noeuds applicatifs, chacun exécutant une instance de ladite application et étant prévu pour réaliser au moins une connexion à ladite application, et
- déploiement d'au moins un noeud applicatif maître ;
ledit procédé comprenant en outre au moins une itération d'une étape d'ajustement, par un noeud applicatif maître, du nombre de noeuds applicatifs dans ledit groupe en fonction d'un indice, dit indice de charge, représentatif de la charge totale des noeuds applicatifs dudit groupe.

En d'autres termes, l'invention propose de déployer un module de répartition de charge qui est prévu pour recevoir toutes les connexions, ou demandes de connexion, à l'application SaaS de la part des utilisateurs : ce qui permet une continuité de sécurité pour chaque connexion. Cela permet également une continuité de service puisque lorsqu'une nouvelle connexion est attribuée à un noeud applicatif, ce dernier assure et maintient la continuité de service pour ladite connexion. L'architecture obtenue est mono-tenant.

De plus, le module de répartition de charge est prévu pour faire le lien entre les utilisateurs et les noeuds applicatifs : il n'est donc pas nécessaire que les noeuds applicatifs soient accessibles aux utilisateurs. Ainsi, il est possible de ne pas utiliser d'adresse IP publique pour les noeuds applicatifs, ce qui permet de diminuer le coût de l'infrastructure car les adresses IP publique sont très onéreuses. Par ailleurs, n'étant pas accessibles aux utilisateurs externes, les noeuds applicatifs ne sont pas sujets à des actes de malveillance.

Surtout, le nombre de noeuds applicatifs utilisés pour déployer l'application est ajusté en fonction d'un indice de charge du groupe de noeuds applicatifs faisant tourner l'application SaaS. Ainsi, il est possible d'augmenter ou de diminuer, à la volée, de manière dynamique, réactive et flexible, la quantité de noeuds utilisés pour déployer l'application. L'architecture déployée est donc toujours ajustée en fonction de la charge à gérer ce qui permet d'optimiser les coûts pour le déploiement de l'application SaaS.

Dans le présent document, par « noeud », on entend tout type de machine, d'unité, de contenant, virtuelle ou physique, capable d'exécuter une application SaaS, et en particulier une application IDaaS. De préférence, un noeud peut être une machine virtuelle.

Par « noeud applicatif », on entend un noeud exécutant une instance de l'application SaaS déployée et capable de gérer une ou plusieurs connexions à ladite application SaaS.

Par « noeud applicatif maître », on entend un noeud applicatif configuré pour avoir la capacité d'ajouter ou de supprimer un noeud applicatif, appelé noeud applicatif esclave, au/du groupe de noeuds applicatifs exécutant l'application SaaS.

Par « noeud applicatif esclave », on entend un noeud applicatif créé par un autre noeud applicatif, appelé noeud applicatif maître, et qui n'a pas la capacité d'ajouter ou de supprimer un noeud applicatif.

Par « indice de charge », on entend une métrique renseignant la charge applicative d'un noeud applicatif, ou d'un groupe de noeuds applicatifs, c'est-à-dire le rapport entre la charge applicative exécutée par ledit noeud et la capacité totale applicative dudit noeud.

L'indice de charge d'un noeud applicatif peut être déterminé de la manière suivante, pour une application SaaS donnée. Le coût de chaque type d'opération proposée pour ladite application SaaS peut être déterminée en prenant en compte la charge CPU/mémoire/réseau nécessaire à la réalisation dudit type d'opération. Lorsque le coût de chaque type d'opération est connu, la charge totale d'un noeud applicatif peut être calculée en additionnant les coûts de toutes les opérations assurées par le noeud applicatif. Comme la capacité totale dudit noeud applicatif est connue en termes de CPU/mémoire/réseau, il est alors possible de calculer l'indice de charge pour ledit noeud.

L'indice de charge du groupe de noeuds applicatifs peut être calculé en fonction des indices de charge individuels des noeuds applicatifs formant ledit groupe. Par exemple, l'indice de charge du groupe peut être une moyenne des indices de charge individuels.

Suivant un exemple de réalisation, l'indice de charge du groupe de noeuds applicatifs peut être égal à l'indice de charge d'un noeud applicatif maître. En effet, dans la présente invention, les connexions sont réparties entre plusieurs noeuds applicatifs par le module de répartition. Par conséquent, il est fort probable que la distribution des connexions est statistiquement égale pour chacun des noeuds applicatifs. Ainsi, il est statistiquement fort probable que l'indice de charge du groupe de noeuds applicatifs est égal à l'indice de charge individuel d'un noeud applicatif maître.

L'étape d'ajustement peut comprendre une étape d'ajout, par un noeud applicatif maître, d'un noeud applicatif esclave lorsque la valeur de l'indice de charge dépasse un seuil haut prédéterminé.

Ainsi, lorsque la charge de traitement des noeuds applicatifs augmente et dépasse une limite haute, un nouveau noeud esclave est ajouté au groupe de noeuds applicatifs pour déployer l'application SaaS. Cela permet de proposer une haute disponibilité de l'application SaaS avec une meilleure gestion de charge.

Il est à noter que l'ajout du noeud applicatif esclave est réalisé par un noeud maître, et non par un autre composant de l'infrastructure. Ainsi, le ou chaque noeud maître, a une vision globale de l'ensemble des noeuds applicatifs déployés pour le déploiement de l'application SaaS.

Lorsqu'il existe plusieurs noeuds maîtres, un noeud maître ajoutant un noeud esclave peut signaler l'ajout dudit noeud esclave aux autres noeuds maître de sorte que chaque noeud maître à une vision de l'ensemble des noeuds applicatifs.

Suivant des modes de réalisation, l'étape d'ajout d'un noeud esclave peut comprendre les étapes suivantes :
- création du noeud applicatif esclave par un module d'orchestration sur demande du noeud applicatif maître,
- démarrage d'une instance de l'application sur ledit noeud esclave,
- transmission d'une adresse IP interne dudit noeud esclave audit module de répartition charge, et
- ajout dudit noeud esclave à une liste de noeuds applicatifs tenue par ledit module de répartition de charge.

L'adresse IP du noeud esclave peut de préférence être une adresse IP interne et non une adresse IP publique.

Suivant des exemples de réalisation, la transmission de l'adresse IP du noeud esclave au module de répartition de charge peut être réalisée par le noeud esclave lui-même. Alternativement, de préférence, la transmission de l'adresse IP du noeud esclave au module de répartition de charge peut être réalisée par le noeud maître. Dans ce cas, ce dernier reçoit l'adresse IP du noeud esclave et la transmet au module de répartition de charge.

Bien entendu, d'autres informations relatives au noeud esclave peuvent être transmises au module de répartition de charge, telles que par exemple un identifiant ou un nom dudit noeud esclave.

Suivant des modes de réalisation, mais de manière nullement limitative, le noeud esclave ajouté peut présenter une puissance, et en particulier une puissance en termes de CPU/mémoire/réseau, supérieure ou égale au noeud maître l'ayant ajouté.

Ainsi, les risques de déficit de puissance seront diminués. En effet, le fait de déployer des noeuds esclaves de puissance égale ou supérieure à celle du noeud maître permet de s'assurer que l'indice de charge calculé par un noeud maître, en fonction de sa propre puissance, sera juste ou du moins n'entrainera pas de déficit de puissance.

L'étape d'ajustement peut comprendre une étape de suppression, par un noeud applicatif maître, d'un noeud applicatif esclave lorsque la valeur de l'indice de charge descend en dessous d'un seuil bas prédéterminé.

Ainsi, l'invention permet d'ajuster à la baisse le dimensionnement de l'infrastructure de déploiement de l'application SaaS lorsque la charge liée audit déploiement diminue, par exemple parce que le nombre de connexions à ladite application diminue. Cela permet de diminuer le coût lié au déploiement de l'application SaaS.

Lorsqu'il existe plusieurs noeuds maîtres, un noeud maître supprimant un noeud esclave peut signaler la suppression dudit noeud esclave aux autres noeuds maître de sorte que chaque noeud maître à une vision de l'ensemble des noeuds applicatifs.

Suivant des modes de réalisation, le procédé selon l'invention peut comprendre une étape de validation de la suppression du noeud esclave. Une telle étape de validation permet de s'assurer que la suppression du noeud esclave ne va pas affecter le déploiement de l'application SaaS.

Suivant des exemples de réalisation, l'étape de validation peut comprendre les étapes suivantes :
- calcul de la valeur projetée de l'indice de charge, après suppression dudit noeud esclave,
- si la valeur projetée calculée reste en dessous du seuil bas, confirmation de la suppression du noeud esclave.

Ainsi, l'invention permet de s'assurer que la suppression du noeud esclave ne pas mettre le groupe de noeuds applicatifs en situation de surcharge ou proche de la surcharge. Le noeud esclave n'est pas supprimé si l'indice de charge projeté après suppression dudit noeud esclave reste supérieur au seuil bas.

L'indice de charge projeté après suppression peut être calculé en gardant la charge applicative actuelle ramenée à une quantité de ressource totale diminuée de celle du noeud esclave à supprimer.

Suivant des exemples de réalisation, l'étape de suppression d'un noeud esclave peut comprendre les étapes suivantes :
- retrait dudit noeud esclave d'une liste de noeuds applicatifs tenue par ledit module de répartition de charge, de sorte que ledit noeud esclave ne reçoit aucune nouvelle connexion,
- poursuite, par ledit noeud esclave, des connexions déjà établies au moment de l'étape de retrait, et
- lorsque ledit noeud applicatif n'a plus aucune connexion établie à l'application, arrêt dudit noeud esclave,

La liste de noeuds applicatifs peut être la liste mentionnée plus haut, tenue par le module de répartition de charge, et permettant audit module de répartition de charge de connaître les noeuds applicatifs vers lesquels il peut diriger les demandes de connexion à l'application SaaS. Cette liste mentionne la liste exhaustive des noeuds applicatifs entre lesquels le module de répartition de charge répartit les demandes de connexion à l'application SaaS.

Le retrait d'un noeud esclave est de préférence demandé par le noeud maître, ou un des noeuds maîtres, en indiquant le nom ou un identifiant ou encore l'adresse IP interne dudit noeud esclave.

Le procédé selon l'invention peut comprendre une mise à jour de l'indice de charge en fonction du nombre de connexions.

En particulier, la mise à jour de l'indice de charge peut être réalisée par un ou chaque module maître en fonction du nombre de connexions gérées par ledit module maître. Par exemple, le module maître peut mettre à jour l'indice de charge à chaque fois que ledit module maître reçoit une nouvelle connexion qui lui est attribuée, et/ou à chaque fois que le module maître termine une connexion en cours. Dans ce cas, le module maître ne voit pas les autres connexions gérées par les autres noeuds applicatifs maître ou esclave. Mais, étant donné que la répartition est réalisée de manière égalitaire entre les noeuds applicatifs, l'indice de charge global est similaire ou égal à l'indice de charge du, ou de chaque, noeud maître, à condition bien sur que tous les noeuds présentent la même puissance de traitement.

Au moins une étape d'ajustement, à savoir une étape d'ajout d'un noeud applicatif esclave ou une étape de suppression d'un noeud applicatif esclave, peut être réalisée en fonction de la valeur actuelle de l'indice de charge.

Alternativement, ou en plus, au moins une étape d'ajustement, à savoir une étape d'ajout d'un noeud applicatif esclave ou une étape de suppression d'un noeud applicatif esclave, peut être réalisée en fonction d'une valeur projetée ou attendue, ou encore estimée, de l'indice de charge.

Le procédé selon l'invention peut comprendre une étape d'estimation d'une valeur estimée, ou corrigée, de l'indice de charge en fonction :
- d'une valeur actuelle dudit indice de charge, et/ou
- d'une variation dudit indice de charge sur une fenêtre temporelle passée, et en particulier précédant immédiatement l'instant actuel, noté t₀, par exemple une fenêtre temporelle de 30 secondes avant l'instant t₀ ; et/ou
- d'une valeur préalablement mémorisée pour le créneau horaire en cours, ou un créneau horaire à venir, ou encore un créneau passé.

Le calcul de la valeur corrigée, ou estimée, de l'indice de charge peut être réalisée par toute relation mathématique connue.

Le calcul de la valeur corrigée, ou estimée, de l'indice de charge peut être réalisée pour un instant à venir, ou pour l'instant actuel.

Par exemple, le procédé selon l'invention peut comprendre une historisation de l'indice de charge sur une période passée prédéterminée, ou un créneau horaire passé.

La période passée prédéterminée peut être une période de 30 secondes, ou d'une minute, précédent immédiatement l'instant actuel, noté t₀.

L'historisation permet de connaître, entre autres, la variation de l'indice de charge, éventuellement la vitesse de la variation et/ou l'accélération de ladite variation. Ainsi, il est possible d'estimer une valeur dudit indice de charge à un instant futur, tel que par exemple à t₀+30 secondes ou t₀+60 secondes. L'ajustement du nombre de noeuds applicatifs peut être réalisée en fonction de ladite valeur estimée.

De plus, le procédé selon l'invention peut comprendre une mémorisation de la valeur de l'indice de charge sur un ou plusieurs créneaux horaires, telles que par exemple des créneaux horaires en début journée, en fin de journée, en semaine ou le weekend.

Dans ce cas, l'estimation de la valeur de l'indice de charge peut être réalisée en outre en fonction desdites valeurs mémorisées pour tel ou tel créneau horaire.

Suivant des modes de réalisation, un seul module maître peut être déployé. Dans ce cas, la ou chaque étape d'ajustement est réalisée par ledit noeud applicatif maître, en particulier à tour de rôle.

Suivant des modes de réalisation, le procédé selon l'invention peut comprendre un déploiement de plusieurs noeuds applicatifs maîtres. Dans ce cas, chacun desdits noeuds maîtres peut être configuré pour réaliser une étape d'ajustement de sorte que chaque noeud maître peut ajuster à la hausse ou à la baisse le nombre de noeuds applicatifs pour déployer l'application SaaS. De préférence, les noeuds maîtres peuvent être configurés de sorte qu'une seule étape d'ajustement est mise en oeuvre à la fois. Par exemple, lorsqu'un noeud maître s'apprête à mettre en oeuvre une étape d'ajustement, il prévient les autres noeuds maîtres qui s'interdisent de mettre en oeuvre une étape d'ajustement tant que celle qui est en cours n'est pas terminée.

Le, ou chaque, noeud maître peut communiquer avec un autre composant de l'infrastructure en utilisant les API de ce composant qui lui sont communiqués, par exemple au moment de la création du noeud maître ou au moment de la création dudit composant. Ainsi, le noeud maître communique avec :
- l'orchestrateur en utilisant les API dudit orchestrateur qui sont communiqués,
- le ou chaque autre noeud maître en utilisant les API dudit autre noeud maître,
- le module de répartition de charge en utilisant les API dudit module de répartition de charge, et
- le, ou chaque, noeud esclave en utilisant les API dudit noeud esclave.

De manière similaire, un noeud esclave communique avec le noeud maître en utilisant les API dudit noeud maître qui lui sont communiqués lors de sa création.

Suivant un autre aspect de la présente invention, il est proposé un programme d'ordinateur comprenant des instructions informatiques, qui lorsqu'elles sont exécutées par ordinateur, mettent en oeuvre les étapes du procédé selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes communicants ensemble.

Suivant un autre aspect de la présente invention, il est proposé un système de déploiement d'une application as a service, SaaS, en particulier d'une application d'authentification as a service, IDaaS, ledit système comprenant :
- un orchestrateur,
- un module de répartition de charge, et
- au moins un noeud applicatif maître ;
configurés pour mettre en oeuvre les étapes du procédé selon l'invention.

Bien entendu, le système selon l'invention peut en outre comprendre, en termes de moyen(s) technique(s), une combinaison quelconque des caractéristiques décrites plus haut en référence au procédé selon l'invention et qui ne sont pas reprises ici par soucis de concision.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'une étape d'ajout d'un noeud applicatif esclave qui peut être mise en oeuvre dans le procédé selon l'invention ;
- la FIGURE 3 est une représentation schématique d'un exemple de réalisation non limitatif d'une étape de suppression d'un noeud applicatif esclave qui peut être mise en oeuvre dans le procédé selon l'invention ; et
- la FIGURE 4 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

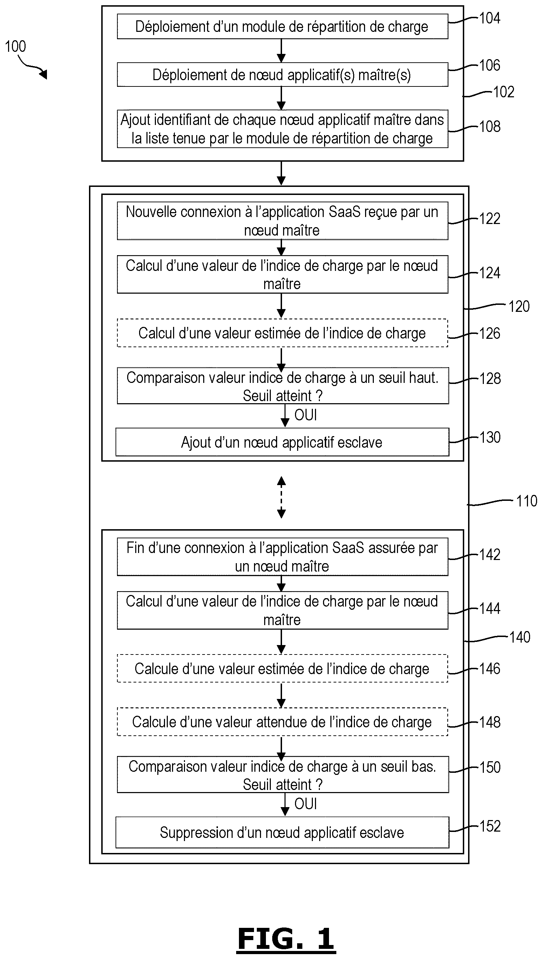

La FIGURE 1 est une représentation schématique d'un exemple de réalisation non limitatif d'un procédé selon l'invention.

Le procédé 100, représenté sur la FIGURE 1, peut être mise en oeuvre pour déployer, au sein d'une infrastructure, une application en mode SaaS. En particulier, le procédé 100 peut être utilisé pour déployer une application d'authentification as a service, appelée application IDaaS.

Le procédé 100 comprend phase préliminaire 102 de démarrage des composants de base pour le déploiement de l'application SaaS.

La phase préliminaire 102 comprend une étape 104 de déploiement, au sein de l'infrastructure, d'un module de répartition de charge, également appelé load balancer dans la suite. Le load balancer permet de recevoir les demandes connexions à l'application SaaS. Pour ce faire, le load balancer comprend une adresse IP publique pouvant être utilisée par les utilisateurs, ou appareils utilisateurs, pour émettre une demande connexion à l'application SaaS. Le load balancer peut être déployé manuellement par un opérateur. Alternativement, le load balancer peut être déployé de manière semi-automatisée, ou automatisée, par un orchestrateur.

Le load balancer peut être une machine physique. De préférence, le load balancer est une machine virtuelle.

Le load balancer tient une liste de noeuds applicatifs, chacun exécutant une instance de l'application SaaS, et prévus pour recevoir et traiter les connexions à l'application SaaS.

La phase préliminaire 102 comprend en outre une étape 106 de déploiement, au sein de l'infrastructure, d'au moins un noeud applicatif maître, et en particulier de plusieurs, par exemple deux, noeuds applicatifs maîtres.

Une adresse IP internet est attribuée à chaque noeud applicatif maître, également appelé noeud maître dans la suite.

De préférence les noeuds applicatifs maîtres sont identiques.

Chaque noeud maître comporte une instance de l'application SaaS et peut recevoir et traiter une ou plusieurs connexions à l'application SaaS.

Chaque noeud maître comporte un module de gestion configuré pour :
- calculer et mettre à jour un indice de charge,
- déclencher l'ajout d'un noeud applicatif esclave, également appelé noeud esclave, et
- déclencher la suppression d'un noeud applicatif esclave.

Le, ou chaque, noeud maître peut être une machine virtuelle.

Le, ou chaque, noeud calcule et met à jour un indice de charge représentatif de la charge de l'ensemble des noeuds applicatifs pour déployer l'application SaaS.

Le, ou chaque, noeud maître peut tenir une liste des noeuds esclaves pour déployer l'application SaaS.

Le, ou chaque, noeud maître peut être déployé par un orchestrateur de l'infrastructure par exemple.

Lors d'une étape 108, l'adresse IP interne, et éventuellement un identifiant, tel qu'un nom, du, ou de chaque, noeud maître est transmis au module de répartition de charge qui le mémorise sur la liste de noeuds applicatifs.

A la fin de la phase préliminaire 102, l'application SaaS est déployée et les connexions à l'application peuvent commencer à être traitée par le ou les noeuds maître.

Le procédé 100 comprend, après la phase préliminaire 102, une phase 110 de traitement des connexions à l'application SaaS. Lors de cette phase 110 chaque nouvelle demande de connexion est reçue par le module de répartition de charge qui l'attribue à l'un des noeuds applicatifs indiqués sur la liste que ledit module de répartition de charge tient.

Au démarrage, la liste comporte uniquement un ou plusieurs noeuds maîtres. Puis, au fur et à mesure, un ou plusieurs noeuds esclaves sont créés lorsque la charge augmente, et ajoutés à la liste. Lorsque la charge diminue un ou plusieurs noeuds esclaves sont supprimés de la liste. Ainsi, le nombre de noeuds applicatifs dans la liste tenue par le module de réparation de charge varie et s'adapte à la charge.

La phase 110 de traitement des connexions peut comporter une plusieurs phases 120 de montée en charge lors de laquelle le nombre de connexions à l'application SaaS augmente. Dans ce cas, la charge à traiter augmente aussi et peut justifier une augmentation du nombre de noeuds applicatifs, pour éviter une surcharge des noeuds applicatifs déjà déployés pouvant provoquer une indisponibilité de service, ou un ralentissement de service.

La phase de montée en charge 120 peut comprendre un ajout d'un noeud esclave par un noeud maître, en particulier lorsque la montée en charge est importante. L'ajout d'un noeud esclave peut se faire de la manière suivante.

Lors d'une étape 122 un noeud maître reçoit une nouvelle connexion à l'application SaaS, à traiter par ledit noeud maître.

Lors d'une étape 124, le noeud maître calcule ou met à jour un indice de charge en fonction du nombre de connexions qu'il gère, du coût de chaque connexion en termes de CPU/mémoire/réseaux et de sa capacité de traitement en termes de CPU/mémoire/réseaux. De manière statistique, l'indice de charge du noeud maître correspond à l'indice de charge moyen de l'ensemble des noeuds applicatifs qui gèrent les connexions à l'application SaaS. En effet, le module de répartition de charge réalise une répartition équilibrée des connexions au sein des noeuds applicatifs listés sur la liste qu'il tient. Ainsi, chacun des noeuds applicatifs a statistiquement un même indice de charge.

Lors d'une étape optionnelle 126, le noeud maître peut calculer une valeur estimée, ou corrigée, de l'indice de charge en fonction de la valeur fournie par l'étape 124 et :
- d'une variation, c'est-à-dire une vitesse de variation ou une accélération de variation, de l'indice de charge sur une fenêtre temporelle précédant immédiatement l'instant actuel, noté t₀, par exemple une fenêtre temporelle de 30 secondes avant l'instant t₀ ; et/ou
- d'une valeur préalablement mémorisée pour le créneau horaire en cours, ou le créneau horaire à venir.
Le calcul de la valeur corrigée, ou estimée, de l'indice de charge peut être réalisée par toute relation mathématique connue.

Lors d'une étape 128, la valeur de l'indice de charge calculée à l'étape 124, ou à l'étape 126, est comparée à un seuil haut représentatif d'une surcharge. Le seuil haut peut par exemple être 80%.

Si le seuil haut n'est pas atteint alors aucune action n'est entreprise.

Si le seuil haut est atteint alors le procédé 100 comprend une étape 130 d'ajout d'un noeud applicatif esclave par le noeud maître. Ce noeud esclave est alors ajouté dans la liste tenue par le module de répartition de charge et peut recevoir les connexions à l'application SaaS.

De préférence, un noeud esclave ajouté par un noeud maître a une capacité de traitement de données, en termes de CPU/mémoire/réseau, égale ou supérieure audit noeud maître.

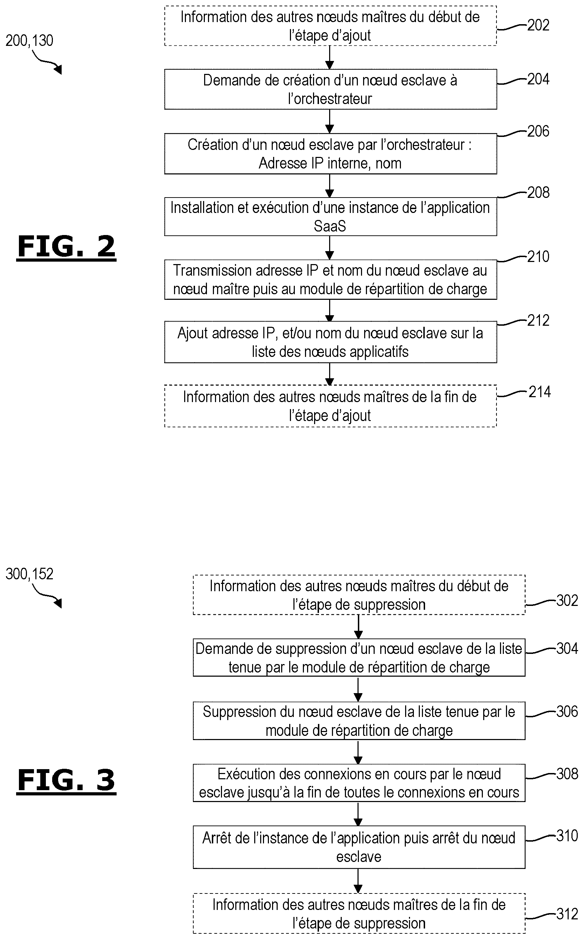

Un exemple non limitatif d'une étape 130 d'ajout d'un noeud esclave est décrit en référence à la FIGURE 2.

Ainsi, les étapes 122-130 peuvent être réitérées autant de fois que souhaité pour ajouter un ou plusieurs noeuds applicatifs esclave afin d'accompagner la montée en charge.

La phase 110 de traitement des connexions peut comporter une plusieurs phases 140 de descente en charge lors de laquelle le nombre de connexions à l'application SaaS diminue. Dans ce cas, la charge à traiter diminue aussi et peut justifier une diminution du nombre de noeuds applicatifs, pour éviter que les noeuds applicatifs déjà déployés soit en sous charge.

La phase de descente en charge 140 peut comprendre une suppression d'un noeud esclave déjà déployé par un noeud maître, en particulier lorsque la descente en charge est importante. La suppression d'un noeud esclave peut se faire de la manière suivante.

Lors d'une étape 142, une connexion traitée par un noeud maître une prend fin.

Lors d'une étape 144, le noeud maître calcule ou met à jour un indice de charge en fonction du nombre de connexions restantes qu'il gère, du coût de chaque connexion en termes de CPU/mémoire/réseaux et de sa capacité de traitement en termes de CPU/mémoire/réseaux. De manière statistique, l'indice de charge du noeud maître correspond à l'indice de charge moyen de l'ensemble des noeuds applicatifs qui gèrent les connexions à l'application SaaS. En effet, le module de répartition de charge réalise une répartition équilibrée des connexions au sein des noeuds applicatifs listés sur la liste qu'il tient. Ainsi, on peut considérer que chacun des noeuds applicatifs a statistiquement un même indice de charge.

Lors d'une étape optionnelle 146, le noeud maître peut calculer une valeur estimée, ou corrigée, de l'indice de charge en fonction de la valeur fournie par l'étape 144 et :
- d'une variation, c'est-à-dire une vitesse de variation ou une accélération de variation, de l'indice de charge sur une fenêtre temporelle précédant immédiatement l'instant actuel, noté t₀, par exemple une fenêtre temporelle de 30 secondes avant l'instant t₀ ; et/ou
- d'une valeur préalablement mémorisée pour le créneau horaire en cours, ou le créneau horaire à venir.
Le calcul de la valeur corrigée, ou estimée, de l'indice de charge peut être réalisée par toute relation mathématique connue.

Lors d'une étape optionnelle 148, une valeur projetée de l'indice de charge peut être calculée en considérant la suppression d'un noeud esclave, en fonction de la capacité dudit noeud esclave et de la valeur de l'indice de charge calculée à l'étape 144 ou 146.

Lors d'une étape 150 la valeur de l'indice de charge calculée à l'étape 144, ou à l'étape 146 ou encore à l'étape 148, est comparée à un seuil bas représentatif d'une sous-charge. Le seuil bas peut par exemple être 30%.

Si la valeur de l'indice de charge n'est pas inférieure ou égale au seuil bas alors aucune action n'est entreprise.

Si la valeur de l'indice de charge est inférieure ou égale au seuil bas, alors le procédé 100 comprend une étape 152 de suppression d'un noeud applicatif esclave par le noeud maître. Ce noeud esclave est alors supprimé de la liste tenue par le module de répartition de charge et ne peut plus recevoir les connexions à l'application SaaS.

Un exemple non limitatif d'une étape 152 de suppression d'un noeud esclave est décrit en référence à la FIGURE 3.

Les étapes 142-152 peuvent être réitérées autant de fois que souhaité pour supprimer un ou plusieurs noeuds applicatifs esclave afin d'accompagner la descente en charge.

La FIGURE 2 est une représentation schématique d'un exemple de réalisation non limitatif d'une étape d'ajout d'un noeud esclave pouvant être mise en oeuvre dans un procédé selon l'invention.

L'étape 200 de la FIGURE 2 peut être l'étape 130 de la FIGURE 1.

L'étape 200 est réalisée pour déployer et ajouter un noeud applicatif esclave à un groupe de noeuds applicatifs assurant le déploiement d'une application SaaS.

L'étape 200 est réalisée par exemple lorsque l'indice de charge mesuré ou estimé dépasse un seuil haut.

L'étape 200 est déclenchée par un noeud applicatif maître.

L'étape 200 comprend une étape optionnelle 202 lors de laquelle le noeud maître communique avec les autres noeuds maîtres pour les prévenir du début de l'étape 200 d'ajout d'un nouveau noeud esclave. Ainsi, les autres noeuds maître s'interdisent de créer ou de supprimer un noeud esclave tant que l'étape 200 de création de noeud, en cours, n'est pas terminée.

L'étape 200 comprend une étape 204 lors de laquelle le noeud maître communique avec un orchestrateur, en utilisant les API orchestrateur qui lui sont communiqués au moment de sa création, pour demander la création d'un noeud applicatif esclave.

Lors d'une étape 206 l'orchestrateur crée le noeud applicatif esclave, par exemple avec les mêmes paramètres techniques que le noeud maître, ou avec des paramètres préalablement définis pour la création d'un noeud esclave. Ces paramètres peuvent être mémorisées dans un fichier de configuration stocké au niveau du noeud maître ou au niveau de l'orchestrateur. Dans tous les cas, le noeud esclave créé à une capacité supérieure ou égale au noeud maître qui a demandé sa création, en terme(s) de CPU/mémoire/réseau.

A sa création, le noeud esclave se voit attribué une adresse IP interne, et optionnellement un nom. Il reçoit également les API pour communiquer avec le noeud maître qui a demandé sa création.

Lors d'une étape 208, une instance de l'application SaaS est installée et démarrée sur le noeud esclave. Cette étape peut par exemple être réalisée par le noeud esclave.

Lors d'une étape 210, l'adresse IP, ainsi que le nom, du noeud esclave est communiqué, par le noeud esclave, au noeud maître, qui, lui, transmet ladite adresse IP et le nom au module de répartition de charge. Optionnellement, le noeud maître mémorise l'adresse IP et le nom du noeud esclave localement.

Los d'une étape 212, le module de répartition de charge inscrit l'adresse IP et l'identifiant du noeud esclave sur la liste des noeuds applicatifs déployant l'application SaaS. Le noeud esclave peut à partir de ce moment recevoir les connexions à l'application SaaS.

Lors d'une étape optionnelle 214, le noeud maître prévient les autres noeuds que l'étape d'ajout d'un noeud esclave est terminée, et leur communique éventuellement l'adresse IP et/ou le nom du noeud esclave qui vient d'être créé. Optionnellement, le ou les noeuds maîtres mettent à jour le nombre de noeuds esclaves.

La FIGURE 3 est une représentation schématique d'un exemple de réalisation non limitatif d'une étape de suppression d'un noeud esclave pouvant être mise en oeuvre dans un procédé selon l'invention.

L'étape 300 de la FIGURE 3 peut être l'étape 152 de la FIGURE 1.

L'étape 300 est réalisée pour supprimer un noeud applicatif esclave d'un groupe de noeuds applicatifs assurant le déploiement d'une application SaaS, en particulier lors d'une phase de descente de charge.

L'étape 300 est réalisée par exemple lorsque l'indice de charge mesuré, ou estimé, descend en dessous d'un seuil bas.

L'étape 300 est déclenchée par un noeud applicatif maître.

L'étape 300 comprend une étape optionnelle 302 lors de laquelle le noeud maître communique avec les autres noeuds maîtres pour les prévenir du début de l'étape 300 de suppression d'un noeud esclave. Ainsi, les autres s'interdisent de créer ou de supprimer un noeud esclave tant que l'étape 300 de suppression d'un noeud n'est pas terminée.

L'étape 300 comprend une étape 304 lors de laquelle le noeud maître communique avec le module de répartition de charge, en utilisant les API du module de répartition de charge qui lui sont communiqués au moment de sa création, pour demander la suppression d'un noeud applicatif esclave de la liste des noeuds applicatifs que ledit module de répartition tient.

Lors d'une étape 306 le module de répartition de charge supprime le nom et/ou l'adresse IP du noeud esclave de la liste des modules applicatifs qu'il tient. Ainsi, le module esclave en question ne reçoit plus de nouvelle connexion à l'application SaaS.

Lors d'une étape 308, le module esclave continue d'assurer les connexions qui lui avaient été attribuées avant l'étape 306, et ce jusqu'à l'extinction de toutes les connexions dont il avait la charge. Ce noeud applicatif esclave ne reçoit pas de nouvelles connexions, de sorte qu'au bout d'un moment ce noeud esclave n'assure plus aucune connexion à l'application SaaS.

Lorsque toutes les connexions assurées par le noeud esclave sont terminées, alors le noeud esclave en informe le noeud maître, supprime l'instance de l'application SaaS, puis se met en arrêt, lors d'une étape 310. Les ressources associées à ce noeud esclave peuvent être détruites ou mises en pause.

Lors d'une étape optionnelle 312, le noeud maître prévient les autres noeuds que l'étape de suppression d'un noeud esclave est terminée. Optionnellement, le ou les noeuds maîtres mettent à jour le nombre de noeuds esclaves.

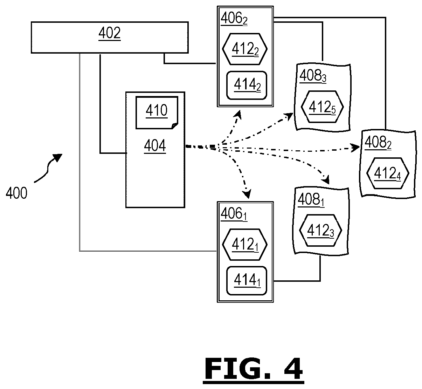

La FIGURE 4 est une représentation schématique d'un exemple de réalisation non limitatif d'un système selon l'invention.

Le système 400 de la FIGURE 4 peut être utilisé pour mettre en oeuvre un procédé selon l'invention et en particulier le procédé 100 de la FIGURE 1.

Le système 400 comprend un orchestrateur 402, un module de répartition de charge 404 et un ou plusieurs noeuds applicatifs maîtres 406. Dans l'exemple représenté, de manière nullement limitative, le système 400 comprend deux noeuds maîtres 406₁ et 406₂.

Le système 400 peut en outre comprendre un ou plusieurs noeuds applicatifs esclaves 408, ajoutés par le ou les noeuds maîtres 406, lors du fonctionnement du système, c'est à dire lors du déploiement de l'application SaaS. Dans l'exemple représenté, de manière nullement limitative, le système 400 comprend trois noeuds esclaves 408₁-408₃.

Le module de répartition de charge 404 et chaque noeud maître 406 peut être créé par l'orchestrateur 402.

Le module de répartition de charge 404 tient à jour une liste 410 de noeuds applicatifs traitant les connexions à l'application SaaS. Dans l'exemple représenté sur la FIGURE 4 cette liste indique les deux maîtres 406₁, 406₂ et les trois noeuds esclaves 408₁, 408₂ et 408₃.

Chaque noeud maître 406₁ et 406₂ exécute une instance de l'application SaaS, respectivement 412₁,412₂. Chaque noeud maître 406₁ et 406₂ comporte un module de gestion, respectivement 414₁ et 414₂, configuré pour :
- calculer et mettre à jour un indice de charge,
- déclencher l'ajout d'un module applicatif esclave, et
- déclencher la suppression d'un noeud applicatif esclave.

Chaque noeud esclave 408 exécute une instance de l'application SaaS, respectivement 412₃-412₄.

De préférence les noeuds maitre sont identiques, mais peuvent être différents.

De préférence les noeuds esclave sont identiques, mais peuvent être différents.

De préférence, chacun des noeuds est une machine virtuelle.

Le nombre noeuds maître n'est pas limité à deux et est supérieur ou égal à 1.

Le nombre noeuds esclave n'est pas limité à trois et est supérieur ou égal à 0.

Bien entendu, ces exemples sont donnés à titre d'exemples particuliers uniquement et l'invention n'est pas limitée aux exemples détaillés ci-dessus. De nombreuses variantes peuvent être imaginées aux exemples donnés ci-dessus sans sortir du cadre de l'invention telle que définie dans les revendications principales.

## Revendications

1. Procédé (100) de déploiement d'une application (412) as a service, SaaS, en particulier d'une application d'authentification as a service, IDaaS, ledit procédé (100) comprenant les étapes suivantes :
- déploiement (104) d'un module de répartition de charge (404), prévu pour recevoir les connexions à ladite application, et distribuer lesdites connexions au sein d'un groupe de noeuds applicatifs (406₁,406₂,408₁-408₃), chacun exécutant une instance de ladite application (412) et étant prévu pour réaliser au moins une connexion à ladite application (412), et
- déploiement (106) d'au moins un noeud applicatif maître (406₁,406₂) ;
ledit procédé (100) comprenant en outre au moins une itération d'une étape (130;152) d'ajustement, par un noeud applicatif maître (406₁,406₂), du nombre de noeuds applicatifs (406₁,406₂,408₁-408₃) dans ledit groupe en fonction d'un indice, dit indice de charge, représentatif de la charge totale des noeuds applicatifs dudit groupe.

2. Procédé (100) selon la revendication précédente, **caractérisé en ce que** l'étape d'ajustement comprend une étape (130,200) d'ajout, par un noeud applicatif maître (406₁,406₂), d'un noeud applicatif esclave (408₁-408₃) lorsque la valeur de l'indice de charge dépasse un seuil haut prédéterminé.

3. Procédé (100) selon la revendication précédente, **caractérisé en ce que** l'étape (130,200) d'ajout d'un noeud esclave comprend les étapes suivantes :
- création (206) du noeud applicatif esclave (408₁-408₃) par un module d'orchestration (402) sur demande du noeud applicatif maître (406₁,406₂),
- démarrage (208) d'une instance de l'application sur ledit noeud esclave (408₁-408₃),
- transmission (210) d'une adresse IP interne dudit noeud esclave (408₁-408₃) au module de répartition charge (404), et
- ajout (212) dudit noeud esclave (408₁-408₃) à une liste (410) de noeuds applicatifs tenue par ledit module de répartition de charge (404).

4. Procédé (100) selon la revendication précédente, **caractérisé en ce que** le noeud esclave (408₁-408₃) présente une puissance de calcul supérieure ou égale au noeud maître (406₁,406₂) l'ayant ajouté.

5. Procédé (100) selon l'une quelconque des revendications précédentes, **caractérisé en ce que** l'étape d'ajustement comprend une étape (152,300) de suppression, par un noeud applicatif maître (406₁,406₂), d'un noeud applicatif esclave (408₁-408₃) lorsque la valeur de l'indice de charge descend en dessous d'un seuil bas prédéterminé.

6. Procédé (100) selon la revendication précédente, **caractérisé en ce qu'**il comprend une étape (148) de validation de la suppression du noeud esclave comprenant les étapes suivantes :
- calcul de la valeur projetée de l'indice de charge, après suppression dudit noeud esclave,
- si la valeur projetée calculée reste en dessous du seuil bas, confirmation de la suppression du noeud esclave.

7. Procédé (100) selon l'une quelconque des revendications précédentes, **caractérisé en ce que** l'étape (152,300) de suppression d'un noeud esclave comprend les étapes suivantes :
- retrait (306) dudit noeud esclave (408₁-408₃) d'une liste (410) de noeuds applicatifs tenue par ledit module de répartition de charge (404), de sorte que ledit noeud esclave (408₁-408₃) ne reçoit aucune nouvelle connexion,
- poursuite (308), par ledit noeud esclave (408₁-408₃), des connexions déjà établies au moment de l'étape étape de retrait (306), et
- lorsque ledit noeud applicatif (408₁-408₃) n'a plus aucune connexion établie à l'application, arrêt dudit noeud esclave (408₁-408₃).

8. Procédé (100) selon la revendication précédente, **caractérisé en ce qu'**il comprend une étape (124,144) mise à jour de l'indice de charge en fonction du nombre de connexions.

9. Procédé (100) selon l'une quelconque des revendications précédentes, **caractérisé en ce qu'**il comprend une étape (126,146) d'estimation d'une valeur estimée, ou corrigée, de l'indice de charge en fonction :
- d'une valeur actuelle dudit indice de charge ; et/ou
- d'une variation dudit indice de charge sur une fenêtre temporelle passée, et en particulier précédant immédiatement l'instant actuel ; et/ou
- d'une valeur préalablement mémorisée pour un créneau horaire en cours, ou un créneau horaire à venir, ou encore un créneau horaire passé.

10. Procédé (100) selon l'une quelconque des revendications précédentes, **caractérisé en ce qu'**il comprend une historisation de l'indice de charge sur une période passée prédéterminée, ou un créneau horaire passé.

11. Procédé (100) selon l'une quelconque des revendications précédentes, **caractérisé en ce qu'**il comprend un déploiement de plusieurs noeuds applicatifs maîtres (406₁,406₂), une seule étape d'ajustement pouvant être mise en oeuvre à la fois par l'un quelconque desdits noeuds maitre (406₁,406₂).

12. Programme d'ordinateur comprenant des instructions informatiques, qui lorsqu'elles sont exécutées par ordinateur, mettent en oeuvre les étapes du procédé (100) selon l'une quelconque des revendications précédentes.

13. Système (400) de déploiement d'une application (412) as a service, SaaS, en particulier d'une application d'authentification as a service, IDaaS, ledit système (400) comprenant :
- un orchestrateur (402),
- un module de répartition de charge (404), et
- au moins un noeud applicatif maître (406₁,406₂) ;
configurés pour mettre en oeuvre les étapes du procédé (100) selon l'une quelconque des revendications 1 à 11.
